# EUROPEAN PATENT SPECIFICATION

(11) **EP 3 582 533 B1**
(45) Date of publication and mention of the grant of the patent: **04.08.2021**
(21) Application number: 17898463.9
(22) Date of filing: 09.06.2017
(51) Int. Cl.: H04W 74/08, H04W 74/00

(54) **CHANNEL COMPETITION METHOD, BASE STATION AND TERMINAL DEVICE**
KANALKONKURRENZVERFAHREN, BASISSTATION UND ENDGERÄTEVORRICHTUNG
PROCÉDÉ DE CONCURRENCE DE CANAL, STATION DE BASE ET DISPOSITIF TERMINAL

(30) Priority: 03.03.2017 CN 201710124384
(43) Date of publication of application: 18.12.2019
(73) Proprietor: Huawei Technologies Co., Ltd., Longgang District Shenzhen, Guangdong 518129 (CN)
(72) Inventor: ZHUANG, Hongcheng, Shenzhen Guangdong 518129 (CN); XU, Kai, Shenzhen Guangdong 518129 (CN)
(74) Representative: Epping - Hermann - Fischer
(86) International application number: PCT/CN2017/087795
(87) International publication number: WO 2018/157501

(56) References cited:
- WO-A1-2016/160126
- WO-A1-2016/187853
- CN-A- 105 049 136
- CN-A- 105 722 097
- CN-A- 106 162 904
- CN-A- 106 301 733
- US-A1- 2015 319 700
- ERICSSON: "On Coordinated UL Channel Access for Enhanced LAA", 3GPP DRAFT; R1-161000, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St. Julian's, Malta; 20160215 - 20160219 14 February 2016 (2016-02-14), XP051054304, Retrieved from the Internet: URL:http://www.3gpp.org/ftp/Meetings_3GPP_ SYNC/RAN1/Docs/ [retrieved on 2016-02-14]
- ZTE MICROELECTRONICS TECHNOLOGY ET AL: "TPC and PHR for UL LAA", 3GPP DRAFT; R1-162330 - TPC AND PHR FOR UL LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 1 April 2016 (2016-04-01), XP051079548, Retrieved from the Internet: URL:http://www.3gpp.org/ftp/tsg_ran/WG1_RL 1/TSGR1_84b/Docs/ [retrieved on 2016-04-01]

## Description

### TECHNICAL FIELD

This application relates to communications technologies, and in particular, to a channel contention method, a base station, and a terminal device.

### BACKGROUND

Resource sharing on an unlicensed spectrum means that use of the specific spectrum is restricted only by indicators such as transmit power and out-of-band leakage, to ensure that a plurality of devices sharing the spectrum meet a basic coexistence requirement. Although use of the unlicensed spectrum is not restricted by a radio technology, a carrier enterprise, and a service life, service quality on the unlicensed spectrum is not ensured. To avoid serious impact, on transmission performance, of co-channel interference caused when the plurality of devices use the unlicensed spectrum, a listen-before-talk (Listen-Before-Talk, LBT) channel access mechanism is defined in regulations of some countries and regions, and requires a transmit node to sense a channel (the channel is an unlicensed spectrum) before sending information, that is, to perform clear channel assessment (Clear Channel Assessment, CCA for short). When the transmit mode detects that the channel is idle, it means that the transmit node successfully preempts the channel. In contrast, when the transmit node detects that the channel is occupied, the transmit node does not send a signal until the next time the transmit node successfully preempts the channel after CCA. For example, in regulations of the European Telecommunications Standards Institute, the LBT includes two sensing policies: frame based equipment (Frame Based Equipment, FBE for short) and load based equipment (Load Based Equipment, LBE for short). A backoff mechanism is specified for the LBE in the regulations. After performing CCA detection and detects that a channel is occupied or that the transmit node ends channel occupation, the transmit node enters extended CCA (that is, enters backoff window duration). The extended CCA corresponds to a counter. In the extended CCA, the transmit node senses a channel once at intervals of the CCA duration. If the transmit node detects that the channel is idle, 1 is subtracted from a value of the counter, and the transmit node occupies the channel for service sending after the counter of the extended CCA returns to 0.

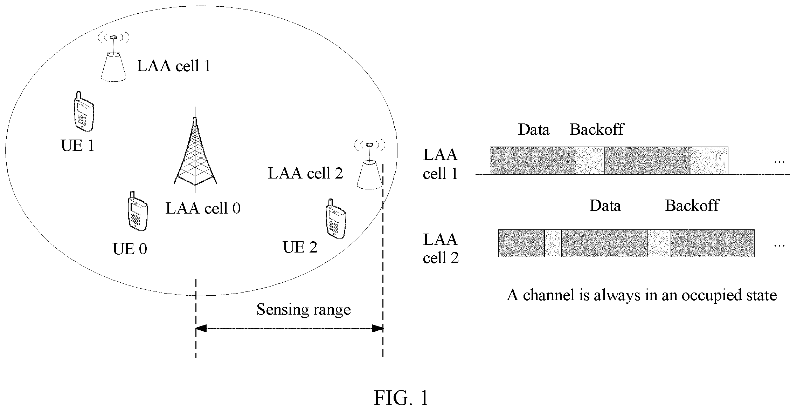

As shown in FIG 1, each of a licensed-assisted access (License Assisted Access, LAA for short) cell 1 and an LAA cell 2 is in a sensing range of an LAA cell 0, and the LAA cell 0 is in a sensing range of each of the LAA cell 1 and the LAA cell 2. However, the LAA cell 1 is out of the sensing range of the LAA cell 2, and the LAA cell 2 is out of the sensing range of the LAA cell 1. In other words, the LAA cell 1 cannot sense whether the LAA cell 2 is sending data, and the LAA cell 2 cannot sense whether the LAA cell 1 is sending data. When the LAA cell 1 releases an occupied channel, the LAA cell 1 cannot sense, within backoff window duration, that the LAA cell 2 is sending data. Therefore, after a counter corresponding to the backoff window duration returns to 0, the LAA cell 1 may continue to occupy the channel to send data. This is true for the LAA cell 2. It can be learned from FIG. 1 that the backoff window duration is usually far shorter than data sending duration. Therefore, a channel release time of the LAA cell 1 may be in a data sending time range of the LAA cell 2, and a channel release time of the LAA cell 2 may be in a data sending time range of the LAA cell 1. Such a phenomenon is referred to as a "data transmission relay". Consequently, the LAA cell 0 obtains no channel through contention for a long time.

To resolve the problem that the LAA cell 0 obtains no channel through contention for a long time, in the prior art, when the LAA cell 0 obtains no channel through contention for a long time, the LAA cell 0 instructs user equipment served by the LAA cell 0 to sense a channel (that is, to sense the unlicensed spectrum), and sends a padding signal after the UE senses that the channel is idle, to notify another cell that the current channel is occupied. In this way, a probability that the another cell accesses the channel is reduced, and "data transmission relays" are reduced, to increase a possibility that the cell 0 accesses the channel.

However, if the UE served by the LAA cell 0 senses no idle channel, the problem that the LAA cell 0 obtains no channel through contention for a long time still cannot be resolved by using the prior-art method.

The paper "On Coordinated UL Channel Access for Enhanced LAA" (R1-161000) from the 3GPP TSG RAN WG1 Meeting #84 discusses UL channel access mechanisms. In that context, the benefits of a coordinated UL channel access mechanism and the functionalities needed to be specified to enable this feature are described.

US 2015/0319700 A1 discloses a method and apparatus for performing loop power control and transmission power control (TPC) in a wireless network. Described in this application are methods including using separate power control loops for communication with an entire wireless network and for point-to-point (P2P) transmissions and separate power control loops for omni-directional and directional beamformed transmissions. Also described in this application are methods and apparatuses for requesting clear channel assessment (CCA) measurements and adjusting CCA thresholds and transmission power based on the reported measurements. Methods and apparatuses are also described wherein access points (APs) coordinate transmission power to reduce interference with each other and to determine optimal transmission power to each mobile station (STA).

WO 2016/187853 A1 discloses a method for accessing a channel in a wireless local area network (WLAN). The method comprises: generating, by a station, a backoff counter value; receiving, by the station, a first triggering frame, and executing a backoff operation, the backoff operation comprising subtracting the number N of sub-channels for random accessing from the backoff counter value to obtain a new backoff counter value; and if the new backoff counter value is 0 or a negative number, randomly selecting, by the station, one of the sub-channels for random accessing, and accessing the sub-channel to transmit an uplink frame.

### SUMMARY

Embodiments of this application provide a channel contention method, a base station, and a terminal device, according to the attached claims, to resolve the following technical problem: In the prior art, when a terminal device served by a cell that obtains no channel through contention for a long time is used to assist the cell in accessing a channel, if the terminal device senses no idle channel, the cell still cannot access the channel.

According to a first aspect, an embodiment of this application provides a channel contention method, including:
sending, by a base station if the base station detects that related information indicating that a channel is in a busy state meets a preset condition, a contention parameter to a terminal device served by the base station, where the contention parameter is used to instruct the terminal device served by the base station to contend for the channel based on the contention parameter; and
if a contention result received by the base station from the terminal device served by the base station is that channel contention fails, adjusting, by the base station, the contention parameter to obtain a new contention parameter, and sending the new contention parameter to the terminal device served by the base station, until the terminal device served by the base station successfully obtains the channel through contention.

The contention parameter includes a clear channel assessment CCA threshold and a backoff window size.

Optionally, the adjusting, by the base station, the contention parameter to obtain a new contention parameter specifically includes:
increasing, by the base station, the CCA threshold, to obtain the new contention parameter; or decreasing, by the base station, the backoff window size, to obtain the new contention parameter.

In the method provided in the first aspect, when the base station detects that the related information indicating that the channel is in a busy state meets the preset condition, the base station sends the contention parameter to the terminal device served by the base station, to instruct the terminal device to contend for the channel based on the contention parameter, and sends the contention result that the channel contention fails to the base station after the channel contention fails, so that after adjusting the contention parameter to obtain the new contention parameter, the base station sends again the new contention parameter to the terminal device served by the base station, until the terminal device served by the base station successfully obtains the channel through contention. After successfully obtaining the channel through contention, the terminal device sends preset information on the channel, and the information is used to notify other devices surrounding the terminal device that the current channel is occupied, so as to reduce a possibility that the surrounding devices preempt the channel, and reduce "data transmission relays". In this way, a possibility that the base station serving the terminal device accesses the channel is increased, and a channel access capability of the base station serving the terminal device is improved.

In a possible design, the sending, by a base station if the base station detects that related information indicating that a channel is in a busy state meets a preset condition, a contention parameter to a terminal device served by the base station specifically includes:
if a quantity of consecutive times for which the base station detects that the channel is in a busy state is greater than or equal to a preset threshold, adjusting, by the base station, an original contention parameter to be sent to the terminal device served by the base station, to obtain the contention parameter, and sending the contention parameter to the terminal device served by the base station.

In a possible design, the sending, by a base station if the base station detects that related information indicating that a channel is in a busy state meets a preset condition, a contention parameter to a terminal device served by the base station specifically includes:
if channel states detected by the base station within preset duration are all busy states, adjusting, by the base station, an original contention parameter to be sent to the terminal device served by the base station, to obtain the contention parameter, and sending the contention parameter to the terminal device served by the base station.

In the method provided in the foregoing possible designs, when the base station continuously detects that the quantity of times that the channel is in a busy state is greater than or equal to the preset threshold, or the channel states detected by the base station for the preset duration are all busy states, the base station determines that the base station cannot access the channel for a long time, the base station adjusts the preset original contention parameter to obtain the contention parameter to be sent to the terminal device, and sends the to-be-sent contention parameter to the terminal device. In this way, the base station is prevented from blindly sending an invalid contention parameter, thereby improving a channel contention capability of the terminal device, and improving a channel access capability of the base station serving the terminal device.

In a possible design, the sending, by the base station, the contention parameter to the terminal device served by the base station specifically includes:
sending, by the base station, a sensing request message to the terminal device served by the base station, where the sensing request message carries the contention parameter and an indication whether the terminal device served by the base station sends information, and the information includes a padding signal or uplink data; and
the receiving, by the base station, a contention result from the terminal device served by the base station specifically includes: receiving, by the base station, a sensing response message from the terminal device served by the base station, where the sensing response message carries the contention result.

According to a second aspect, an embodiment of this application provides a channel contention method, including:
receiving, by a terminal device, a contention parameter sent by a base station, where the contention parameter is sent when the base station detects that related information indicating that a channel is in a busy state meets a preset condition;
contending, by the terminal device, for the channel based on the contention parameter, sending a contention result that the channel contention fails to the base station when the channel contention fails, and receiving, from the base station, a new contention parameter obtained after an adjustment, until the terminal device successfully obtains the channel through contention by using the new contention parameter; and
sending, by the terminal device, preset information after successfully obtaining the channel through contention, where the information includes a padding signal or uplink data; wherein the contention parameter comprises a clear channel assessment CCA threshold and a backoff window size.

In the method provided in the first aspect, when the base station detects that the related information indicating that the channel is in a busy state meets the preset condition, the base station sends the contention parameter to the terminal device served by the base station, to instruct the terminal device to contend for the channel based on the contention parameter, and sends the contention result that the channel contention fails to the base station after the channel contention fails, so that after adjusting the contention parameter to obtain the new contention parameter, the base station sends again the new contention parameter to the terminal device served by the base station, until the terminal device served by the base station successfully obtains the channel through contention. After successfully obtaining the channel through contention, the terminal device sends the preset information on the channel, and the information is used to notify other devices surrounding the terminal device that the current channel is occupied, so as to reduce a possibility that the surrounding devices preempt the channel, and reduce "data transmission relays". In this way, a possibility that the base station serving the terminal device accesses the channel is increased, and a channel access capability of the base station serving the terminal device is improved.

In a possible design, the contention parameter is obtained after the base station adjusts, when the base station determines that a continuously detected quantity of times that the channel is in a busy state is greater than or equal to a first preset threshold, an original contention parameter to be sent to the terminal device.

In a possible design, the contention parameter is obtained after the base station adjusts, when the base station determines that channel states detected within preset duration are all busy states, an original contention parameter to be sent to the terminal device.

In a possible design, the receiving, by a terminal device, a contention parameter sent by a base station specifically includes:
receiving, by the terminal device, a sensing request message sent by the base station, where the sensing request message carries the contention parameter and an indication whether the terminal device sends the information; and
the sending a contention result that the channel contention fails to the base station when the channel contention fails specifically includes:
   sending, by the terminal device, a sensing response message to the base station when the channel contention fails, where the sensing response message carries the contention result that the channel contention fails.

In a possible design, the sending, by the terminal device, preset information after successfully obtaining the channel through contention specifically includes:
after successfully obtaining the channel through contention, determining, by the terminal device based on the indication whether the terminal device sends the information, to send the information.

For beneficial effects of the method provided in the possible designs of the second aspect, refer to the beneficial effects brought by the possible designs of the first aspect. Details are not described herein again.

According to a third aspect, to implement the channel contention method in the first aspect, an embodiment of this application provides a base station according to the attached claims, and the base station has functions of implementing the channel contention method. The functions may be implemented by using hardware, or may be implemented by using hardware executing corresponding software. The hardware or software herein includes one or more modules corresponding to the foregoing functions.

In a possible implementation of the third aspect, the base station includes a plurality of function modules or units, configured to implement any channel contention method in the first aspect.

According to a fourth aspect, to implement the channel contention method in the second aspect, an embodiment of this application provides a terminal device according to the attached claims, and the terminal device has functions of implementing the channel contention method. The functions may be implemented by using hardware, or may be implemented by using hardware executing corresponding software. The hardware or software herein includes one or more modules corresponding to the foregoing functions.

In a possible implementation of the fourth aspect, the terminal device includes a plurality of function modules or units, configured to implement any channel contention method in the second aspect.

Compared with the prior art, for the channel contention method, the base station, and the terminal device that are provided in this application, when the base station detects that the related information indicating that the channel is in a busy state meets the preset condition, the base station sends the contention parameter to the terminal device served by the base station, to instruct the terminal device to contend for the channel based on the contention parameter, and sends the contention result that the channel contention fails to the base station after the channel contention fails, so that after adjusting the contention parameter to obtain the new contention parameter, the base station sends again the new contention parameter to the terminal device served by the base station, until the terminal device served by the base station successfully obtains the channel through contention. After successfully obtaining the channel through contention, the terminal device sends the preset information on the channel, and the information is used to notify other devices surrounding the terminal device that the current channel is occupied, so as to reduce a possibility that the surrounding devices preempt the channel, and reduce "data transmission relays". In this way, a possibility that the base station serving the terminal device accesses the channel is increased, and a channel access capability of the base station serving the terminal device is improved.

### BRIEF DESCRIPTION OF DRAWINGS

FIG 1 is a schematic diagram of a data transmission relay scenario according to this application;
FIG. 2 is a schematic architectural diagram of a communications system according to this application;
FIG. 3 is a signaling flowchart of Embodiment 1 of a channel contention method according to this application;
FIG. 4 is a schematic flowchart of Embodiment 2 of a channel access method according to the embodiment of this application;
FIG. 5 is a schematic flowchart of Embodiment 3 of a channel access method according to the embodiment of this application;
FIG. 6 is a signaling flowchart of Embodiment 4 of a channel access method according to the embodiment of this application;
FIG. 7 is a signaling flowchart of Embodiment 5 of a channel contention method according to this application;
FIG. 8 is a signaling flowchart of Embodiment 6 of a channel contention method according to this application;
FIG. 9 is a schematic structural diagram of Embodiment 1 of a base station according to this application;
FIG. 10 is a schematic structural diagram of Embodiment 1 of a terminal device according to this application;
FIG. 11 is a schematic structural diagram of Embodiment 2 of a base station according to this application;
FIG. 12 is a schematic structural diagram of Embodiment 2 of a terminal device according to this application;
FIG. 13 is a schematic structural diagram of Embodiment 3 of a base station according to this application;
FIG. 14 is a schematic structural diagram of Embodiment 3 of a terminal device according to this application;
FIG. 15 is a schematic structural diagram of Embodiment 4 of a base station according to this application; and
FIG. 16 is a schematic structural diagram of Embodiment 4 of a terminal device according to this application.

### DESCRIPTION OF EMBODIMENTS

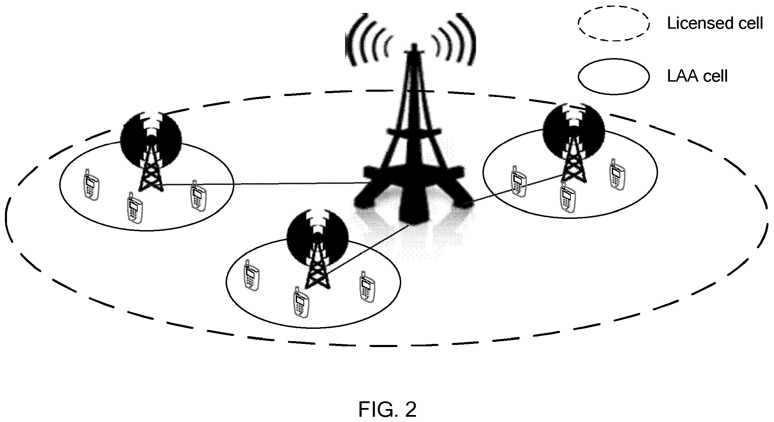

A channel contention method provided in embodiments of this application is applicable to a schematic architectural diagram of a communications system shown in FIG. 2. As shown in FIG. 2, the system includes a plurality of base stations and terminal devices served by the base stations. It should be noted that the communications system shown in FIG. 2 is applicable to different network standards, such as a global system for mobile communications (Global System of Mobile communication, GSM for short), code division multiple access (Code Division Multiple Access, CDMA for short), a wideband code division multiple access (Wideband Code Division Multiple Access, WCDMA for short), time division-synchronous code division multiple access (Time Division-Synchronous Code Division Multiple Access, TD-SCDMA for short), a long term evolution (Long Term Evolution, LTE for short) system, and future 5G. Optionally, the communications system may alternatively be applicable to network standards in licensed-assisted access (License Assisted Access Long, LAA for short).

Therefore, optionally, the base station may be a base transceiver station (Base Transceiver Station, BTS for short) or a base station controller in GSM or CDMA, a NodeB (NodeB, NB for short) and/or a radio network controller (Radio Network Controller, RNC for short) in WCDMA, an evolved NodeB (Evolutional Node B, eNB or eNodeB for short) in LTE, a relay node or an access point, a gNB in a future 5G network, or the like. This is not limited herein in this application.

The terminal device may be a wireless terminal or a wired terminal. The wireless terminal may be a device that provides a user with voice and/or another service data connectivity, a handheld device with a wireless connection function, or another processing device connected to a wireless modem. The wireless terminal may communicate with one or more core networks through a radio access network (Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For another example, the wireless terminal may alternatively be a device such as a personal communication service (Personal Communication Service, PCS for short) phone, a cordless phone, a session initiation protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), a user agent (User Agent), or a user device (User Device or User Equipment). This is not limited herein.

It should be noted that, in this application, the base station may also be referred to as a cell, and information interaction between the base station and the terminal device may also be referred to as interaction between the cell and the terminal device. Optionally, detecting a channel by the base station may also be referred to as detecting a channel by the cell. Base stations mentioned in the following embodiments may all be equivalent to cells, and the base stations and the cells are interchangeable. In this application, the cell may be an LAA cell.

When an LAA cell 0 obtains no channel through contention for a long time due to a data relay scenario shown in FIG. 1, in the prior art, the LAA cell 0 instructs user equipment served by the LAA cell 0 to sense a channel (in other words, to sense an unlicensed spectrum), and sends a padding signal after the UE senses that the channel is idle, to notify another cell that the current channel is occupied. In this way, a probability that the another cell accesses the channel is reduced, and "data transmission relays" are reduced, to increase a possibility that the cell 0 accesses the channel. However, if the UE served by the LAA cell 0 senses no idle channel, the problem that the LAA cell 0 obtains no channel through contention for a long time still cannot be resolved by using the prior-art method.

The channel contention method, the base station, and the terminal device that are provided in this application are intended to resolve the following technical problem: In the prior art, when a terminal device served by a cell that obtains no channel through contention for a long time is used to assist the cell in accessing a channel, if the terminal device senses no idle channel, the cell still cannot access the channel.

Technical solutions of this application and how to resolve the technical problem based on the technical solutions of this application are described below in detail by using specific embodiments. The following several specific embodiments may be combined with each other, and a same or similar concept or process may not be described again in some embodiments. The following describes the embodiments of this application with reference to the accompanying drawings.

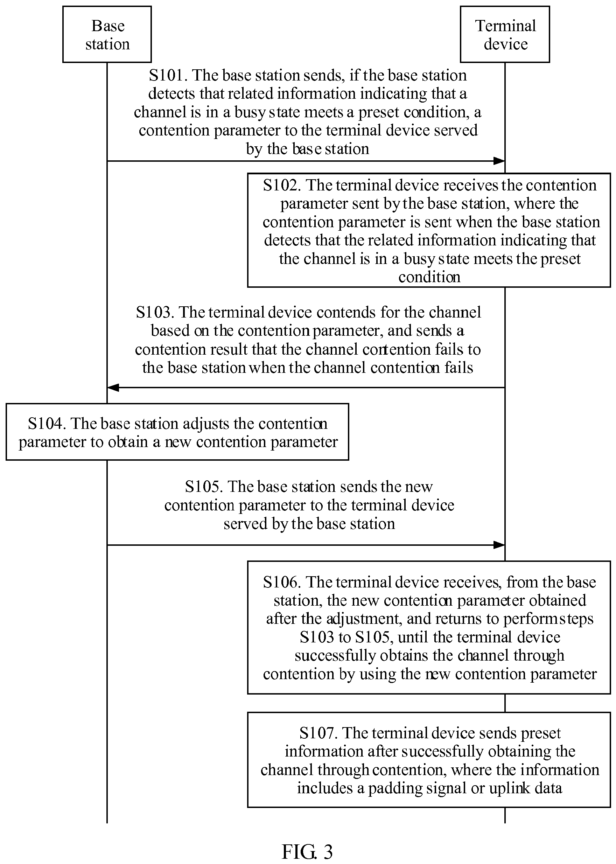

FIG. 3 is a signaling flowchart of Embodiment 1 of a channel contention method according to this application. In this embodiment, a specific process is described as follows: When a base station continuously obtains no channel through contention, a probability that the base station accesses a channel is increased with assistance of a terminal device served by the base station. As shown in FIG. 3, the method includes the following steps.

S101: The base station sends, if the base station detects that related information indicating that a channel is in a busy state meets a preset condition, a contention parameter to the terminal device served by the base station.

The contention parameter is used to instruct the terminal device served by the base station to contend for the channel based on the contention parameter.

Specifically, in the various LAA communications systems shown in FIG. 2, such as LAA-LTE or licensed-assisted access new radio (License Assisted Access Long New Radio, LAA-NR for short) in 5G, due to network density, channel (to be specific, an unlicensed spectrum) contention is fiercer.

In this application, when the base station needs to send downlink data, the base station starts to contend for a channel. When the base station detects that the related information indicating that the channel is in a busy state meets the preset condition, the base station sends, by using a licensed spectrum, the contention parameter to the terminal device served by the base station. The contention parameter is used to instruct the terminal device served by the base station to contend for the channel based on the contention parameter. Optionally, the preset condition is a condition used to assist the base station in determining that the base station cannot access a channel for a long time. Optionally, the preset condition may be that a quantity of consecutive times for which the base station detects that the channel is in a busy state is greater than or equal to a preset threshold, and in this case, the base station determines that the base station cannot obtain the channel through contention for a long time. Optionally, the preset condition may be alternatively that channel states detected by the base station within preset duration are all busy states, and in this case, the base station determines that the base station cannot obtain the channel through contention for a long time. It should be noted that a terminal device receiving the contention parameter in this application is the terminal device served by the base station.

Optionally, the contention parameter may include a clear channel assessment CCA (Clear Channel Assessment, CCA for short) threshold and a backoff window size. When the base station contends for the channel, the base station detects whether the channel is idle, to determine whether the base station successfully preempts the channel. In a process in which the base station determines whether the channel is idle, if other devices surrounding the base station are using the channel, these devices send corresponding signals, and energy of the channel (that is, receive power of the signals) is detected by the base station. Therefore, determining, by the base station, whether the channel is idle is actually determining whether total receive power of the other surrounding devices received within a sensing time is less than a specified threshold. If the total receive power is less than the threshold, the base station determines that the channel is idle, and preempts the channel. The threshold is the CCA threshold. For a description of the backoff window size, refer to an LBE sensing policy in the prior art. The backoff window size may be used as a value of a counter when the base station enters backoff window duration. For example, assuming that the backoff window size is 100, a counting threshold of the counter may be any value between 0 and 100.

It should be noted that there may be a plurality of channels (unlicensed spectra) in this embodiment. In other words, the base station may contend for different channels. For different channels, different contention parameters are sent by the base station to the terminal device. Table 1 shows a correspondence between an unlicensed spectrum and a contention parameter. In this embodiment, assuming that the base station currently contends for an unlicensed spectrum 1, in this case, the unlicensed spectrum 1 is used as a downlink channel for detection.

**Table 1**

| Unlicensed spectrum | CCA threshold | Backoff window size |
|---|---|---|
| Unlicensed spectrum 1 | CCA threshold 1 | CW 1 |
| Unlicensed spectrum 2 | CCA threshold 2 | CW 2 |
| ... | ... | ... |
| Unlicensed spectrum N | CCA threshold N | CWN |

S102: The terminal device receives the contention parameter sent by the base station, where the contention parameter is sent when the base station detects that the related information indicating that the channel is in a busy state meets the preset condition.

S103: The terminal device contends for the channel based on the contention parameter, and sends a contention result that the channel contention fails to the base station when the channel contention fails.

Specifically, after the terminal device receives the contention parameter sent by the base station, the terminal device contends for the channel by using the contention parameter. A process in which the terminal device contends for the channel may be as follows:
When the terminal device contends for the channel for the first time, the terminal device detects whether total receive power of the other devices surrounding the terminal device is less than the CCA threshold. If yes, it indicates that the current channel is idle, and the terminal device successfully preempts the channel. After the terminal device sends all data, the terminal device releases the channel, and enters the corresponding backoff window duration. After the value of the counter corresponding to the backoff window size returns to 0, the base station considers that the channel is idle in this case, and continues to send data on the channel (herein, the terminal device contends for the channel for the second time). In other words, a determining basis on which the terminal device contends for the channel for the first time is the CCA threshold, and a determining basis on which the terminal device contends for the channel for the second time is the backoff window size.

An example in which the terminal device contends for a channel once is used. After the terminal device receives a contention parameter sent by the base station, the terminal device contends for the channel based on the contention parameter, that is, detects the channel (referring to the foregoing example, the terminal also contends for the unlicensed spectrum 1, and the unlicensed spectrum 1 is used as an uplink channel for detection in this case). When the terminal device detects that the channel is in a busy state, the terminal device considers that the channel contention fails, and then the terminal device reports a contention result (or a detection result) that the channel contention fails to the base station by using a licensed spectrum.

S104: The base station adjusts the contention parameter to obtain a new contention parameter. S105: The base station sends the new contention parameter to the terminal device served by the base station.

S106: The terminal device receives, from the base station, the new contention parameter obtained after the adjustment, and returns to perform steps S103 to S105, until the terminal device successfully obtains the channel through contention by using the new contention parameter.

Specifically, after the base station receives the contention result that the channel contention fails and that is sent by the terminal device, the base station adjusts the contention parameter sent to the terminal device, to obtain the new contention parameter, and sends the new contention parameter to the terminal device, so that the terminal device detects the channel again based on the contention parameter (in other words, the new contention parameter) obtained after the adjustment. If a contention result generated after the terminal device contends for the channel by using the new contention parameter is still that the channel contention fails, likewise, the terminal device sends again the contention result that the channel contention fails to the base station by using a licensed spectrum, so that the base station adjusts the new contention parameter again, to obtain another new contention parameter. Other cases can be obtained by analogy, until the terminal device successfully obtains the channel through contention by using a new contention parameter.

Optionally, the base station may adjust the contention parameter according to a preset rule. For example, the unlicensed spectrum 1 corresponds to a plurality of contention parameters, and the plurality of contention parameters are arranged in an order. When the base station sends a first contention parameter to the terminal, and the terminal device unsuccessfully obtains the channel through contention by using the first contention parameter, the base station sends a second contention parameter (in other words, the new contention parameter in the foregoing embodiment) to the terminal. Other cases can be obtained by analogy. In other words, the base station may adjust, in the preset order of arranging the contention parameters, a contention parameter to be sent to the terminal device. In this way, the terminal device may contend for the channel again based on a contention parameter obtained after the adjustment, thereby greatly increasing a probability that the terminal device successfully preempts the channel.

Optionally, when the contention parameter includes the CCA threshold and the backoff window size, when the base station adjusts the contention parameter, the base station may further increase the CCA threshold sent to the terminal device, to obtain a new contention parameter. In this way, a probability that the total signal receive power of the other surrounding devices detected by the terminal device is less than the CCA threshold is increased, so that a probability that the terminal device successfully preempts the channel is increased. Optionally, when the base station adjusts the contention parameter, the base station may further decrease the backoff window size sent to the terminal device, to obtain a new contention parameter. In this way, when the terminal device enters the backoff window duration, the counting threshold of the counter is decreased, and a time within which the counter returns to 0 is shortened, so that the terminal device can quickly determine that the channel is idle. Therefore, the terminal device considers that the terminal device successfully preempts the channel, and a probability that the terminal device successfully preempts the channel is also increased.

S107: The terminal device sends preset information after successfully obtaining the channel through contention, where the information includes a padding signal or uplink data.

Specifically, after the terminal device successfully obtains the channel through contention, the terminal device may send the preset information by using the channel. Optionally, the information may be the padding signal, and the padding signal may include one or more bits. Optionally, the information may be alternatively the uplink data sent to the base station.

It should be noted that the terminal device sends the preset information on the successfully preempted channel, and the information is used to notify the other devices surrounding the terminal device that the current channel is occupied, so as to reduce a possibility that the other surrounding devices preempt the channel, and reduce "data transmission relays". In this way, there is a relatively high possibility that the base station serving the terminal device accesses the channel. In the scenario shown in FIG. 1, "data transmission relays" occur between the LAA cell 1 and the LAA cell 2, and consequently, the LAA cell 0 obtains no channel through contention for a long time. According to this embodiment of this application, the LAA cell 0 sends a contention parameter to a terminal device served by the LAA cell 0, and continuously adjusts the contention parameter based on a channel contention result of the terminal device, until the terminal device successfully obtains a channel through contention. Then the terminal device sends preset information on the channel. It is assumed that the terminal device is a terminal device relatively close to the LAA cell 1 and the LAA cell 2. In other words, the terminal device in this application may be a terminal device in a sensing range of the LAA cell 1 and a sensing range of the LAA cell 2. In this way, the LAA cell 1 and the LAA cell 2 sense that the terminal device is occupying the channel in this case. Therefore, the LAA cell 1 and the LAA cell 2 do not access the channel in this case. After the terminal device sends all the preset information, the terminal device releases the channel. In this case, the LAA cell 0 has a same channel contention opportunity as the LAA cell 1 and the LAA cell 2. The "data transmission relays" occurring between the LAA cell 1 and the LAA cell 2 are reduced, thereby greatly increasing a possibility that the LAA cell 0 accesses the channel.

In the channel contention method provided in this embodiment of this application, when the base station detects that the related information indicating that the channel is in a busy state meets the preset condition, the base station sends the contention parameter to the terminal device served by the base station, to instruct the terminal device to contend for the channel based on the contention parameter, and sends the contention result that the channel contention fails to the base station after the channel contention fails, so that after adjusting the contention parameter to obtain the new contention parameter, the base station sends again the new contention parameter to the terminal device served by the base station, until the terminal device served by the base station successfully obtains the channel through contention. After successfully obtaining the channel through contention, the terminal device sends the preset information on the channel, and the information is used to notify the other devices surrounding the terminal device that the current channel is occupied, so as to reduce a possibility that the surrounding devices preempt the channel, and reduce "data transmission relays". In this way, a possibility that the base station serving the terminal device accesses the channel is increased, and a channel access capability of the base station serving the terminal device is improved.

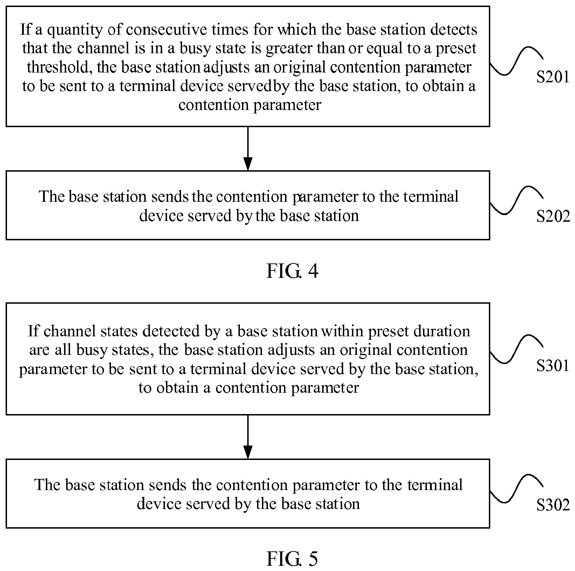

FIG. 4 is a schematic flowchart of Embodiment 2 of a channel access method according to the embodiment of this application. A specific process in which a base station sends a contention parameter to a terminal device at a specific time is described in this embodiment. Based on the foregoing embodiment, further, S101 may specifically include the following steps:
S201: If a quantity of consecutive times for which the base station detects that the channel is in a busy state is greater than or equal to a preset threshold, the base station adjusts an original contention parameter to be sent to the terminal device served by the base station, to obtain the contention parameter.
S202: The base station sends the contention parameter to the terminal device served by the base station.

In this embodiment, when the base station sends the contention parameter to the terminal device, the base station usually presets an original contention parameter. When the base station detects, based on the original contention parameter, that the channel is busy, and detects that the quantity of times that the channel is busy is less than the preset threshold, the base station prepares for next contention based on the original contention parameter. When the base station continuously detects that the quantity of times that the channel is in a busy state is greater than or equal to the preset threshold, the base station determines that the base station cannot access the channel for a long time. Therefore, the base station adjusts the original contention parameter, to obtain the contention parameter to be sent to the terminal device, and sends the contention parameter to the terminal device. When the base station detects that the channel is idle, optionally, when the base station learns that the terminal device has an uplink data sending requirement, the base station may send the original contention parameter to the terminal device by using a licensed spectrum, so that the terminal device contends for the channel by using the original contention parameter, to send uplink data.

FIG. 5 is a schematic flowchart of Embodiment 3 of a channel access method according to the embodiment of this application. Another specific process in which a base station sends a contention parameter to a terminal device at a specific time is described in this embodiment. Based on the foregoing embodiment, further, S101 may specifically include the following steps:
S301: If channel states detected by the base station within preset duration are all busy states, the base station adjusts an original contention parameter to be sent to the terminal device served by the base station, to obtain the contention parameter.
S302: The base station sends the contention parameter to the terminal device served by the base station.

In this embodiment, when the base station sends the contention parameter to the terminal device, the base station usually presets an original contention parameter. When the base station detects, based on the original contention parameter, that the channel is busy, and duration for which the base station detects the channel states does not exceed the preset duration, the base station prepares for next contention based on the original contention parameter. When the channel states detected by the base station for the preset duration are all busy states, the base station determines that the base station cannot access the channel for a long time. Therefore, the base station adjusts the original contention parameter, to obtain the contention parameter to be sent to the terminal device, and sends the contention parameter to the terminal device. For when the base station sends the original contention parameter to the terminal device, refer to the description in Embodiment 2. Details are not described herein again.

With reference to the embodiments shown in FIG. 4 and FIG. 5, when the base station continuously detects that the quantity of times that the channel is in a busy state is greater than or equal to the preset threshold, or the channel states detected by the base station for the preset duration are all busy states, the base station determines that the base station cannot access the channel for a long time, the base station adjusts the preset original contention parameter to obtain the contention parameter to be sent to the terminal device, and sends the to-be-sent contention parameter to the terminal device. In this way, the base station is prevented from blindly sending an invalid contention parameter, thereby improving a channel contention capability of the terminal device, and improving a channel access capability of the base station serving the terminal device.

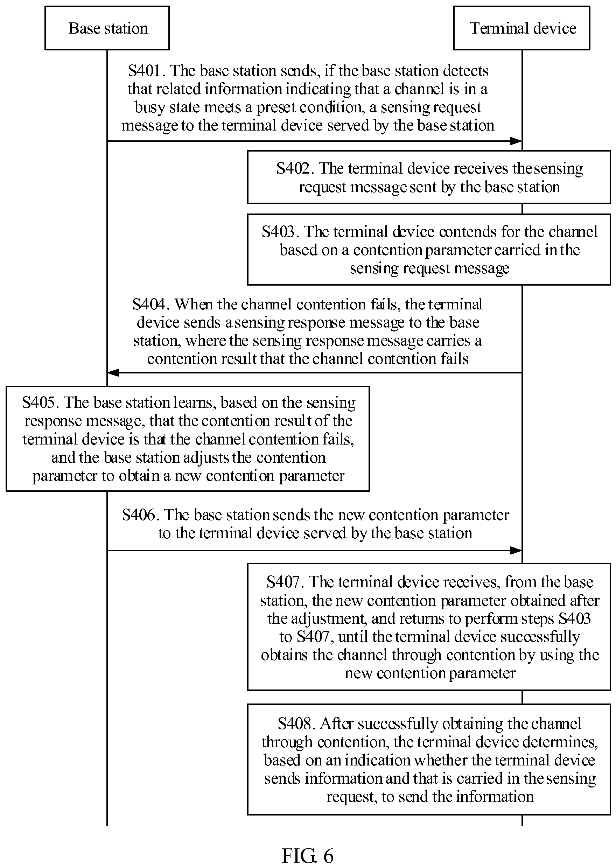

FIG. 6 is a signaling flowchart of Embodiment 4 of a channel access method according to the embodiment of this application. In this embodiment, an entire process is described as follows: When a base station cannot access a channel for a long time, the base station improves a channel access capability of the base station with assistance of a terminal device served by the base station. As shown in FIG. 6, the method includes the following steps.

S401: The base station sends, if the base station detects that related information indicating that a channel is in a busy state meets a preset condition, a sensing request message to the terminal device served by the base station.

The sensing request message carries a contention parameter and an indication whether the terminal device served by the base station sends information, and the information includes a padding signal or uplink data.

Specifically, when a quantity of consecutive times for which the base station detects that the channel is in a busy state is greater than or equal to a preset threshold, or channel states detected by the base station within preset duration are all busy states, the base station determines that the base station cannot access the channel for a long time. In this way, the base station sends, by using a licensed spectrum, the sensing request message to the terminal device served by the base station. The sensing request message carries the contention parameter and the indication whether the terminal device sends the information, and the information may include the padding signal or the uplink data. Optionally, the indication whether the terminal device sends the information may include two bits, different bit values of one bit may be used to notify whether the terminal device sends the padding signal, and different bit values of the other bit may be used to notify whether the terminal device sends the uplink data. For example, when the indication is 10, it indicates that the base station instructs the terminal device to send the padding signal instead of the uplink data when the channel is successfully obtained through contention; when the indication is 01, it indicates that the base station instructs the terminal device to send the uplink data instead of the padding signal when the channel is successfully obtained through contention.

It should be noted that when the base station determines that the base station cannot access the channel for a long time, the indication whether the terminal device sends the information and that is carried in the sensing request message is used to instruct the terminal device to send the padding signal or the uplink data when the channel is successfully obtained through contention (in this case, the indication whether the terminal device sends the information is used to instruct the terminal device to perform sending), so that other devices surrounding the terminal device can learn that the terminal device is occupying the channel, and do not contend for the channel. Optionally, the sensing request message may be an RRC message, or may be another signaling message. A specific form of the sensing request message is not limited in this application.

In addition, the contention parameter carried in the sensing request message is a parameter obtained after the base station adjusts an original contention parameter.

S402: The terminal device receives the sensing request message sent by the base station.

S403: The terminal device contends for the channel based on the contention parameter carried in the sensing request message.

S404: When the channel contention fails, the terminal device sends a sensing response message to the base station, where the sensing response message carries a contention result that the channel contention fails.

Optionally, the sensing response message may be an RRC message, or may be another signaling message. A specific form of the sensing request message is not limited in this application. The sensing response message includes an indication whether the terminal device succeeds in the contention, and the "indication whether the terminal device succeeds in the contention" is used to represent the contention result of the channel contention performed by the terminal device.

S405: The base station learns, based on the sensing response message, that the contention result of the terminal device is that the channel contention fails, and the base station adjusts the contention parameter to obtain a new contention parameter.

S406: The base station sends the new contention parameter to the terminal device served by the base station.

S407: The terminal device receives, from the base station, the new contention parameter obtained after the adjustment, and returns to perform steps S403 to S407, until the terminal device successfully obtains the channel through contention by using the new contention parameter.

For the process of S402 to S407, refer to the description in Embodiment 1. Details are not described herein again.

S408: After successfully obtaining the channel through contention, the terminal device determines, based on the indication whether the terminal device sends the information and that is carried in the sensing request, to send the information.

After the terminal device successfully obtains the channel through contention, the terminal device determines, based on the indication whether the terminal device sends the information and that is carried in the sensing request, whether to send the padding signal or the uplink data on the channel that is currently obtained through contention, so that when sensing the padding signal or the uplink data, the other devices surrounding the terminal device can learn that the current channel is occupied, and currently does not continue to contend for the channel. In this way, a channel access capability of the other devices is reduced, and "data transmission relays" are reduced, so that a possibility that the base station serving the terminal device accesses the channel is increased, and a channel access capability of the base station serving the terminal device is improved.

The process in which the base station improves a channel access capability of the base station with assistance of the terminal device is mainly described in the foregoing embodiment. In the scenario shown in FIG. 1, the following problem also exists: The LAA cell 1 is out of a sensing range of the LAA cell 2, the LAA cell 2 is out of a sensing range of the LAA cell 1, the LAA cell 1 is a hidden node for the LAA cell 2, and the LAA cell 2 is a hidden node for the LAA cell 1. Therefore, when the LAA cell 1 sends data to UE 1, the LAA cell 1 does not know that the LAA cell 2 is also sending data in this case. In this way, the UE 1 may receive two signals, and the data sent by the LAA cell 2 interferes with receiving the downlink data of the LAA cell 1 by the UE 1. This technical problem is caused by the LAA cell 2, in other words, the hidden node. For the technical problem, this application provides the following embodiment. For details, refer to the procedure described below.

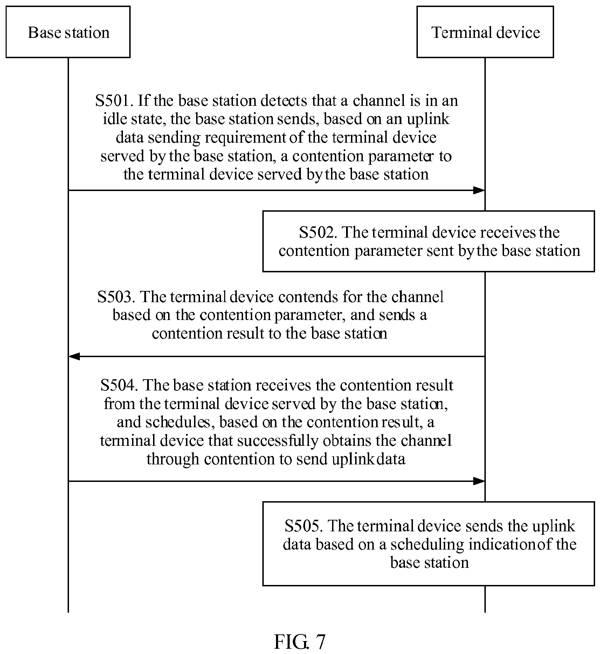

FIG. 7 is a signaling flowchart of Embodiment 5 of a channel contention method according to this application. In this embodiment, a specific process is described as follows: When a terminal has an uplink data sending requirement, a base station schedules a terminal that successfully obtains a channel through contention to send uplink data, to avoid interfering with UE when the UE receives the data. As shown in FIG. 7, the method includes the following steps.

S501: If the base station detects that a channel is in an idle state, the base station sends, based on an uplink data sending requirement of a terminal device served by the base station, a contention parameter to the terminal device served by the base station.

The contention parameter is used to instruct the terminal device to contend for the channel based on the contention parameter.

Specifically, the base station may learn the uplink data sending requirement of the terminal device. Optionally, the terminal device may actively notify the uplink data sending requirement of the terminal device to the base station, or the base station may trigger the terminal device to notify the uplink data sending requirement of the terminal device to the base station. When the base station needs to send downlink data, the base station contends for the channel based on a preset original contention parameter, that is, detects whether the channel is in an idle state. The original contention parameter may include a preset original CCA threshold and a preset original backoff window size. For how the base station contends for the channel based on the preset original CCA threshold and the preset original backoff window size, refer to the process in which the terminal device contends for the channel based on the contention parameter sent by the base station in the foregoing embodiment. The two processes are similar. Details are not described herein again.

When the channel detects that the channel is idle, and the base station learns that the terminal device has the uplink data sending requirement in this case, the base station sends the contention parameter to the terminal device by using a licensed spectrum. The contention parameter may be the original contention parameter preset by the base station.

It should be noted that the terminal device in this embodiment is the terminal device having the uplink data sending requirement, and there may be one or more terminal devices.

S502: The terminal device receives the contention parameter sent by the base station.

S503: The terminal device contends for the channel based on the contention parameter, and sends a contention result to the base station.

S504: The base station receives the contention result from the terminal device served by the base station, and schedules, based on the contention result, a terminal device that successfully obtains the channel through contention to send uplink data.

S505: The terminal device sends the uplink data based on a scheduling indication of the base station.

Specifically, after the terminal device receives the contention parameter sent by the base station, the terminal device contends for the channel based on the contention parameter, and reports the contention result (or a detection result) to the base station by using a licensed spectrum. After the base station receives the contention result reported by the terminal device having the uplink data sending requirement, the base station determines, based on the contention result, terminal devices that successfully obtain the channel through contention, and schedules these terminal devices that successfully obtain the channel through contention to send the uplink data. For example, the base station sends the scheduling indication to these terminal devices that successfully obtain the channel through contention, and these terminal devices that successfully obtain the channel through contention send the uplink data based on the scheduling indication.

The base station schedules only the terminal devices that successfully obtain the channel through contention to send the uplink data, and once the terminal devices that successfully obtain the channel through contention determine that the terminal devices successfully obtain the channel through contention, it indicates that the terminal devices are not interfered with, when receiving downlink data sent by the base station serving the terminal devices, by another base station (relative to the base station serving the terminal devices, the another base station is a hidden node) sending the downlink data, so as to improve user experience. Therefore, the base station serving the terminal devices schedules only the terminal devices that successfully obtain the channel through contention to send the uplink data, thereby greatly avoiding the interference of the hidden node to receiving the downlink data by the terminal device.

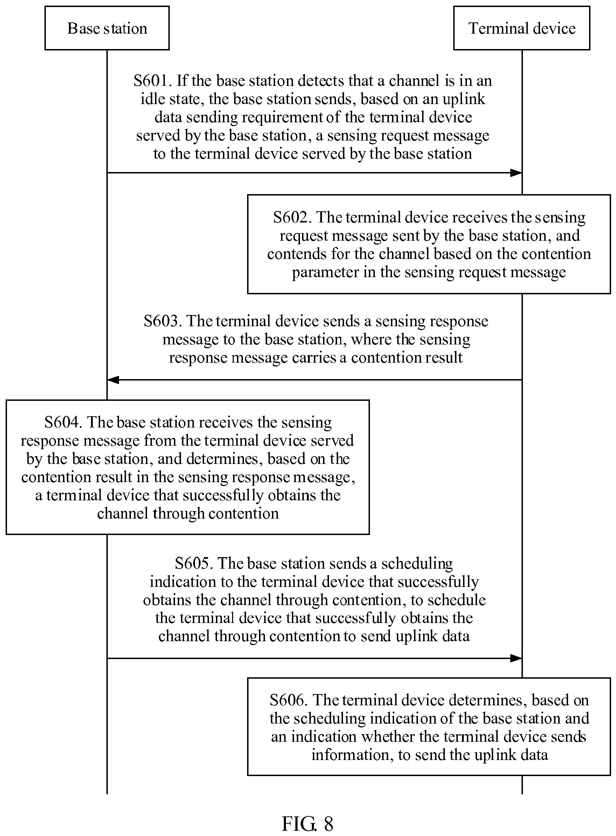

FIG. 8 is a signaling flowchart of Embodiment 6 of a channel contention method according to this application. In this embodiment, an entire process is described as follows: When a terminal has an uplink data sending requirement, a base station schedules a terminal that successfully obtains a channel through contention to send uplink data, to avoid interfering with UE when the UE receives the data. As shown in FIG. 8, the method includes the following steps.

S601: If the base station detects that a channel is in an idle state, the base station sends, based on an uplink data sending requirement of a terminal device served by the base station, a sensing request message to the terminal device served by the base station.

The sensing request message carries a contention parameter and an indication whether the terminal device served by the base station sends information, and the information includes a padding signal or uplink data.

Specifically, for a process in which the base station detects the channel, refer to the description in S501 in Embodiment 5. Details are not described herein again.

When the channel detects that the channel is idle, and the base station learns that the terminal device has the uplink data sending requirement in this case, the base station sends the sensing request message to the terminal device by using a licensed spectrum. The sensing request message carries the contention parameter and the indication whether the terminal device sends the information, and the contention parameter may be an original contention parameter preset by the base station.

Optionally, the indication whether the terminal device sends the information may include two bits, different bit values of one bit may be used to notify whether the terminal device sends the padding signal, and different bit values of the other bit may be used to notify whether the terminal device sends the uplink data. For example, when the indication is 01, it indicates that the base station instructs the terminal device to send the uplink data instead of the padding signal when the channel is successfully obtained through contention.

It should be noted that when the base station detects that the channel is idle, the indication whether the terminal device sends the information and that is carried in the sensing request message is used to instruct the terminal device to send only the uplink data instead of the padding signal when the channel is successfully obtained through contention. The content indicated by the "indication whether the terminal device sends the information" in this embodiment is different from the content indicated by the "indication whether the terminal device sends the information" in Embodiment 4 shown in FIG. 6.

Optionally, the sensing request message may be an RRC message, or may be another signaling message. A specific form of the sensing request message is not limited in this application.

S602: The terminal device receives the sensing request message sent by the base station, and contends for the channel based on the contention parameter in the sensing request message.

S603: The terminal device sends a sensing response message to the base station, where the sensing response message carries a contention result.

Optionally, the sensing response message may be an RRC message, or may be another signaling message. A specific form of the sensing request message is not limited in this application. The sensing response message includes an indication whether the contention succeeds, and the indication whether the contention succeeds is used to represent the contention result of the channel contention performed by the terminal device.

S604: The base station receives the sensing response message from the terminal device served by the base station, and determines, based on the contention result in the sensing response message, a terminal device that successfully obtains the channel through contention.

S605: The base station sends a scheduling indication to the terminal device that successfully obtains the channel through contention, to schedule the terminal device that successfully obtains the channel through contention to send the uplink data.

S606: The terminal device determines, based on the scheduling indication of the base station and the indication whether the terminal device sends the information, to send the uplink data.

After the base station determines contention results of terminal devices based on the indication whether the contention succeeds and that is in the sensing response message, the base station determines, based on the contention results or the detection results of these terminal devices having uplink data sending requirements, terminal devices that successfully obtain the channel through contention. Then the base station sends the scheduling indication to these terminal devices that successfully obtain the channel through contention, to schedule these terminal devices that successfully obtain the channel through contention to send uplink data. When the terminal devices receive the scheduling indication, the terminal device further needs to determine, based on the indication whether the terminal device sends the information and that is in the sensing request message, whether to send the uplink data. When the base station detects that the channel is idle, the indication whether the terminal device sends the information and that is in the sensing request message sent to the terminal device is used to notify the terminal device that only the uplink data instead of the padding signal needs to be sent. Therefore, the terminal device may send the uplink data based on the indication.

The base station schedules only the terminal devices that successfully obtain the channel through contention to send the uplink data, and once the terminal devices that successfully obtain the channel through contention determine that the terminal devices successfully obtain the channel through contention, it indicates that the terminal devices are not interfered with, when receiving downlink data sent by the base station serving the terminal devices, by another base station (relative to the base station serving the terminal devices, the another base station is a hidden node) sending the downlink data, so as to improve user experience. Therefore, the base station serving the terminal devices schedules only the terminal devices that successfully obtain the channel through contention to send the uplink data, thereby greatly avoiding the interference of the hidden node to receiving the downlink data by the terminal device.

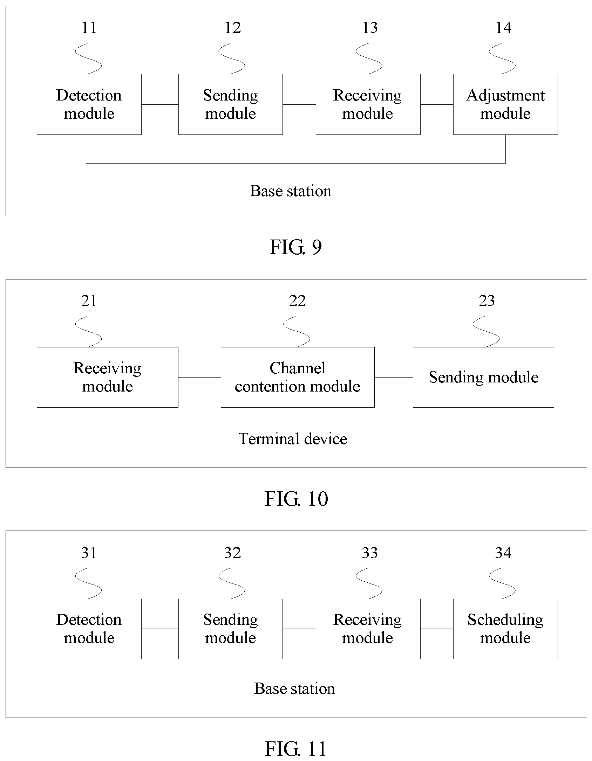

FIG. 9 is a schematic structural diagram of Embodiment 1 of a base station according to this application. As shown in FIG. 9, the base station may include: a detection module 11, a sending module 12, a receiving module 13, and an adjustment module 14.

Specifically, the sending module 12 is configured to send, when the detection module 11 detects that related information indicating that a channel is in a busy state meets a preset condition, a contention parameter to a terminal device served by the base station, where the contention parameter is used to instruct the terminal device served by the base station to contend for the channel based on the contention parameter;
the adjustment module 14 is configured to adjust the contention parameter when a contention result received by the receiving module 13 from the terminal device served by the base station is that channel contention fails, to obtain a new contention parameter; and
the sending module 12 is further configured to send the new contention parameter to the terminal device served by the base station, until the terminal device served by the base station successfully obtains the channel through contention.

Optionally, the adjustment module 14 is specifically configured to: when the detection module 11 continuously detects that a quantity of times that the channel is in a busy state is greater than or equal to a preset threshold, adjust an original contention parameter to be sent to the terminal device served by the base station, to obtain the contention parameter; and
the sending module 12 is specifically configured to send the contention parameter to the terminal device served by the base station.

Optionally, the adjustment module 14 is specifically configured to: when channel states detected by the detection module 11 within preset duration are all busy states, adjust an original contention parameter to be sent to the terminal device served by the base station, to obtain the contention parameter; and
the sending module 12 is specifically configured to send the contention parameter to the terminal device served by the base station.

Optionally, the contention parameter includes a clear channel assessment CCA threshold and a backoff window size.

Optionally, the adjustment module 14 is specifically configured to: increase the CCA threshold, to obtain the new contention parameter; or decrease the backoff window size, to obtain the new contention parameter.

Optionally, the sending module 12 is specifically configured to send a sensing request message to the terminal device served by the base station, where the sensing request message carries the contention parameter and an indication whether the terminal device served by the base station sends information, and the information includes a padding signal or uplink data; and
the receiving module 13 is specifically configured to receive a sensing response message from the terminal device served by the base station, where the sensing response message carries the contention result.

The base station provided in this embodiment of this application may perform the foregoing method embodiment. Implementation principles and technical effects of the base station are similar to those of the foregoing method embodiment. Details are not described herein again. FIG. 10 is a schematic structural diagram of Embodiment 1 of a terminal device according to this application. As shown in FIG. 10, the terminal device may include: a receiving module 21, a channel contention module 22, and a sending module 23.

Specifically, the receiving module 21 is configured to receive a contention parameter sent by a base station, where the contention parameter is sent when the base station detects that related information indicating that a channel is in a busy state meets a preset condition;
the channel contention module 22 is configured to contend for the channel based on the contention parameter;
the sending module 23 is configured to send a contention result that the channel contention fails to the base station when the channel contention fails;
the receiving module 21 is configured to receive, from the base station, a new contention parameter obtained after an adjustment, until the channel contention module 22 successfully obtains the channel through contention by using the new contention parameter; and
the sending module 23 is further configured to send preset information after the channel is successfully obtained through contention, where the information includes a padding signal or uplink data.

Optionally, the contention parameter is obtained after the base station adjusts, when the base station determines that a continuously detected quantity of times that the channel is in a busy state is greater than or equal to a first preset threshold, an original contention parameter to be sent to the terminal device.

Optionally, the contention parameter is obtained after the base station adjusts, when the base station determines that channel states detected within preset duration are all busy states, an original contention parameter to be sent to the terminal device.

Optionally, the contention parameter includes a clear channel assessment CCA threshold and a backoff window size.

Optionally, the receiving module 21 is specifically configured to receive a sensing request message sent by the base station, where the sensing request message carries the contention parameter and an indication whether the terminal device sends the information; and
the sending module 23 is specifically configured to send a sensing response message to the base station when the channel contention fails, where the sensing response message carries the contention result that the channel contention fails.

Optionally, the sending module 23 is specifically configured to: after the channel is successfully obtained through contention, determine, based on the indication whether the terminal device sends the information, to send the information.

The terminal device provided in this embodiment of this application may perform the foregoing method embodiment. Implementation principles and technical effects of the terminal device are similar to those of the foregoing method embodiment. Details are not described herein again.

FIG. 11 is a schematic structural diagram of Embodiment 2 of a base station according to this application. As shown in FIG. 11, the base station may include: a detection module 31, a sending module 32, a receiving module 33, and a scheduling module 34.

Specifically, the sending module 32 is configured to: when the detection module 31 detects that a channel is in an idle state, send, based on an uplink data sending requirement of a terminal device served by the base station, a contention parameter to the terminal device served by the base station, where the contention parameter is used to instruct the terminal device to contend for the channel based on the contention parameter;
the receiving module 33 is configured to receive a contention result from the terminal device served by the base station; and
the scheduling module 34 is configured to schedule, based on the contention result, a terminal device that successfully obtains the channel through contention to send uplink data.

Optionally, the sending module 32 is specifically configured to send a sensing request message to the terminal device served by the base station, where the sensing request message carries the contention parameter and an indication whether the terminal device served by the base station sends information, and the information includes a padding signal or uplink data; and
the receiving module 33 is specifically configured to receive a sensing response message from the terminal device served by the base station, where the sensing response message carries the contention result.

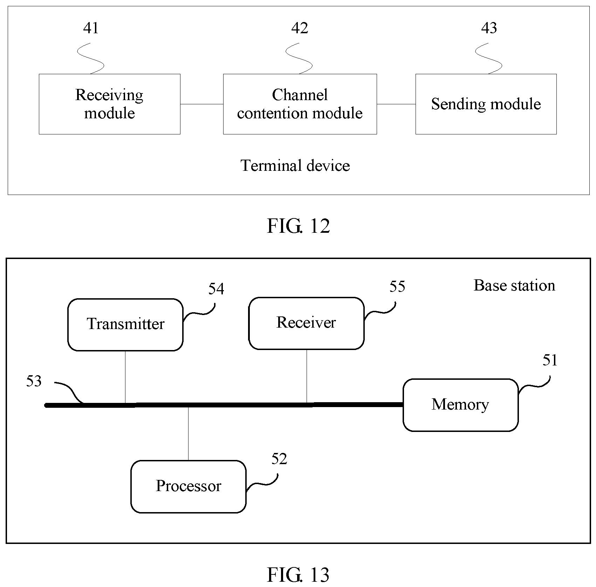

The base station provided in this embodiment of this application may perform the foregoing method embodiment. Implementation principles and technical effects of the base station are similar to those of the foregoing method embodiment. Details are not described herein again. FIG. 12 is a schematic structural diagram of Embodiment 2 of a terminal device according to this application. As shown in FIG. 12, the terminal device includes: a receiving module 41, a channel contention module 42, and a sending module 43.

Specifically, the receiving module 41 is configured to receive a contention parameter sent by a base station based on an uplink data sending requirement of the terminal device when the base station detects that a channel is in an idle state;
the channel contention module 42 is configured to contend for the channel based on the contention parameter; and
the sending module 43 is configured to: send a contention result to the base station; and send uplink data based on a scheduling indication of the base station when the contention result is that the terminal device successfully obtains the channel through contention.

Optionally, the receiving module 41 is specifically configured to receive a sensing request message sent by the base station based on the uplink data sending requirement of the terminal device when the base station detects that the channel is in an idle state, where the sensing request message carries the contention parameter and an indication whether the terminal device sends information, and the information includes a padding signal or uplink data; and
the sending module 43 is specifically configured to send a sensing response message to the base station, where the sensing response message carries the contention result.

Optionally, the sending module 43 is specifically configured to determine, based on the scheduling indication of the base station and the indication whether the terminal device sends the information, to send the uplink data.

The terminal device provided in this embodiment of this application may perform the foregoing method embodiment. Implementation principles and technical effects of the terminal device are similar to those of the foregoing method embodiment. Details are not described herein again. FIG. 13 is a schematic structural diagram of Embodiment 3 of a base station according to this application. The base station may include a memory 51, a processor 52, at least one communications bus 53, a transmitter 54, and a receiver 55. The communications bus 53 is configured to implement a communications connection between the elements. The memory 51 may include a high speed RAM memory, or may include a non-volatile memory NVM, for example, at least one magnetic disk storage. The memory 51 may store various programs, configured to: complete various processing functions and implement method steps in the embodiment. In this embodiment, the transmitter 54 may be a radio frequency processing module or a baseband processing module in the base station, and the receiver 55 may be a radio frequency processing module or a baseband processing module in the base station. The transmitter 54 and the receiver 55 may be separately disposed, or may be integrated into a transceiver. Both the transmitter 54 and the receiver 55 may be coupled to the processor 52. Specifically, in this embodiment, the transmitter 54 is configured to send, when the processor 52 detects that related information indicating that a channel is in a busy state meets a preset condition, a contention parameter to a terminal device served by the base station, where the contention parameter is used to instruct the terminal device served by the base station to contend for the channel based on the contention parameter;
the processor 52 is configured to adjust the contention parameter when a contention result received by the receiver 55 from the terminal device served by the base station is that channel contention fails, to obtain a new contention parameter; and
the transmitter 54 is further configured to send the new contention parameter to the terminal device served by the base station, until the terminal device served by the base station successfully obtains the channel through contention.

Optionally, the processor 52 is specifically configured to: when continuously detecting that a quantity of times that the channel is in a busy state is greater than or equal to a preset threshold, adjust an original contention parameter to be sent to the terminal device served by the base station, to obtain the contention parameter; and
the transmitter 54 is specifically configured to send the contention parameter to the terminal device served by the base station.

Optionally, the processor 52 is specifically configured to: when channel states detected within preset duration are all busy states, adjust an original contention parameter to be sent to the terminal device served by the base station, to obtain the contention parameter; and
the transmitter 54 is specifically configured to send the contention parameter to the terminal device served by the base station.

Optionally, the contention parameter includes a clear channel assessment CCA threshold and a backoff window size.

Optionally, the processor 52 is specifically configured to: increase the CCA threshold, to obtain the new contention parameter; or decrease the backoff window size, to obtain the new contention parameter.

Optionally, the transmitter 54 is specifically configured to send a sensing request message to the terminal device served by the base station, where the sensing request message carries the contention parameter and an indication whether the terminal device served by the base station sends information, and the information includes a padding signal or uplink data; and
the receiver 55 is specifically configured to receive a sensing response message from the terminal device served by the base station, where the sensing response message carries the contention result.

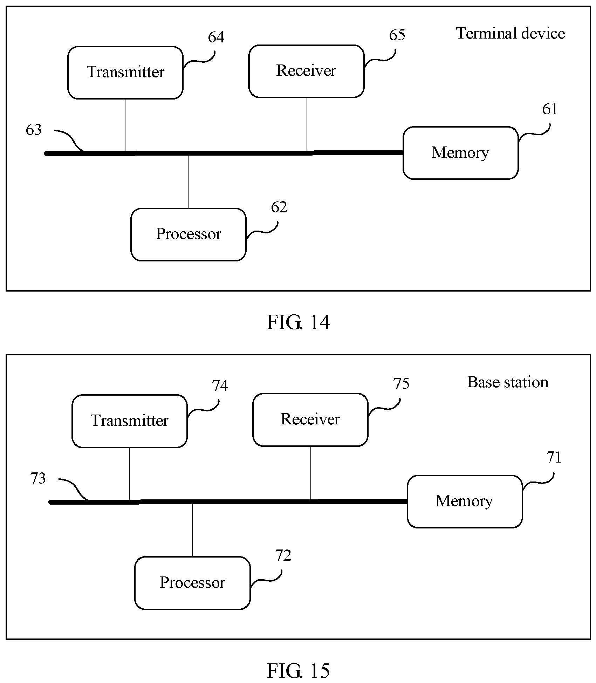

The base station provided in this embodiment of this application may perform the foregoing method embodiment. Implementation principles and technical effects of the base station are similar to those of the foregoing method embodiment. Details are not described herein again. FIG. 14 is a schematic structural diagram of Embodiment 3 of a terminal device according to this application. The terminal device may include a memory 61, a processor 62, at least one communications bus 63, a transmitter 64, and a receiver 65. The communications bus 63 is configured to implement a communications connection between the elements. The memory 61 may include a high speed RAM memory, or may include a non-volatile memory NVM, for example, at least one magnetic disk storage. The memory 61 may store various programs, configured to: complete various processing functions and implement method steps in the embodiment. In this embodiment, the transmitter 64 may be a radio frequency processing module or a baseband processing module in the terminal device, and the receiver 65 may be a radio frequency processing module or a baseband processing module in the terminal device. The transmitter 64 and the receiver 65 may be separately disposed, or may be integrated into a transceiver. Both the transmitter 64 and the receiver 65 may be coupled to the processor 62. Specifically, in this embodiment, the receiver 65 is configured to receive a contention parameter sent by a base station, where the contention parameter is sent when the base station detects that related information indicating that a channel is in a busy state meets a preset condition;
the processor 62 is configured to contend for the channel based on the contention parameter;
the transmitter 64 is configured to send a contention result that the channel contention fails to the base station when the channel contention fails;
the receiver 65 is configured to receive, from the base station, a new contention parameter obtained after an adjustment, until the processor 62 successfully obtains the channel through contention by using the new contention parameter; and
the transmitter 64 is further configured to send preset information after the channel is successfully obtained through contention, where the information includes a padding signal or uplink data.

Optionally, the contention parameter is obtained after the base station adjusts, when the base station determines that a continuously detected quantity of times that the channel is in a busy state is greater than or equal to a first preset threshold, an original contention parameter to be sent to the terminal device.

Optionally, the contention parameter is obtained after the base station adjusts, when the base station determines that channel states detected within preset duration are all busy states, an original contention parameter to be sent to the terminal device.

Optionally, the contention parameter includes a clear channel assessment CCA threshold and a backoff window size.

Optionally, the receiver 65 is specifically configured to receive a sensing request message sent by the base station, where the sensing request message carries the contention parameter and an indication whether the terminal device sends the information; and
the transmitter 64 is specifically configured to send a sensing response message to the base station when the channel contention fails, where the sensing response message carries the contention result that the channel contention fails.

Optionally, the transmitter 64 is specifically configured to: after the channel is successfully obtained through contention, determine, based on the indication whether the terminal device sends the information, to send the information.

The terminal device provided in this embodiment of this application may perform the foregoing method embodiment. Implementation principles and technical effects of the terminal device are similar to those of the foregoing method embodiment. Details are not described herein again. FIG. 15 is a schematic structural diagram of Embodiment 4 of a base station according to this application. As shown in FIG. 15, the base station may include a memory 71, a processor 72, at least one communications bus 73, a transmitter 74, and a receiver 75. The communications bus 73 is configured to implement a communications connection between the elements. The memory 71 may include a high speed RAM memory, or may include a non-volatile memory NVM, for example, at least one magnetic disk storage. The memory 71 may store various programs, configured to: complete various processing functions and implement method steps in the embodiment. In this embodiment, the transmitter 74 may be a radio frequency processing module or a baseband processing module in the base station, and the receiver 75 may be a radio frequency processing module or a baseband processing module in the base station. The transmitter 74 and the receiver 75 may be separately disposed, or may be integrated into a transceiver. Both the transmitter 74 and the receiver 75 may be coupled to the processor 72.

Specifically, in this embodiment, the transmitter 74 is configured to: when the processor 72 detects that a channel is in an idle state, send, based on an uplink data sending requirement of a terminal device served by the base station, a contention parameter to the terminal device served by the base station, where the contention parameter is used to instruct the terminal device to contend for the channel based on the contention parameter;
the receiver 75 is configured to receive a contention result from the terminal device served by the base station; and
the processor 72 is further configured to schedule, based on the contention result, a terminal device that successfully obtains the channel through contention to send uplink data.

Optionally, the transmitter 74 is specifically configured to send a sensing request message to the terminal device served by the base station, where the sensing request message carries the contention parameter and an indication whether the terminal device served by the base station sends information, and the information includes a padding signal or uplink data; and
the receiver 75 is specifically configured to receive a sensing response message from the terminal device served by the base station, where the sensing response message carries the contention result.

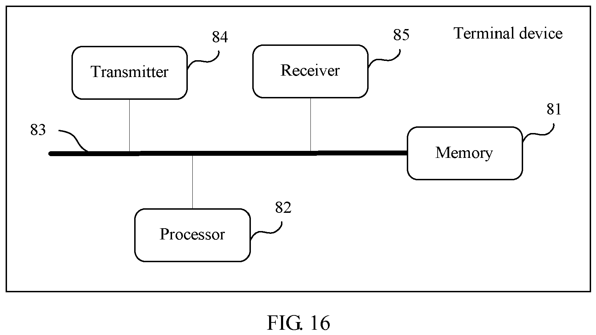

The base station provided in this embodiment of this application may perform the foregoing method embodiment. Implementation principles and technical effects of the base station are similar to those of the foregoing method embodiment. Details are not described herein again. FIG. 16 is a schematic structural diagram of Embodiment 4 of a terminal device according to this application. As shown in FIG. 16, the terminal device may include a memory 81, a processor 82, at least one communications bus 83, a transmitter 84, and a receiver 85. The communications bus 83 is configured to implement a communications connection between the elements. The memory 81 may include a high speed RAM memory, or may include a non-volatile memory NVM, for example, at least one magnetic disk storage. The memory 81 may store various programs, configured to: complete various processing functions and implement method steps in the embodiment. In this embodiment, the transmitter 84 may be a radio frequency processing module or a baseband processing module in the terminal device, and the receiver 85 may be a radio frequency processing module or a baseband processing module in the terminal device. The transmitter 84 and the receiver 85 may be separately disposed, or may be integrated into a transceiver. Both the transmitter 84 and the receiver 85 may be coupled to the processor 82. Specifically, in this embodiment, the receiver 85 is configured to receive a contention parameter sent by a base station based on an uplink data sending requirement of the terminal device when the base station detects that a channel is in an idle state;
the processor 82 is configured to contend for the channel based on the contention parameter; and
the transmitter 84 is configured to: send a contention result to the base station; and send uplink data based on a scheduling indication of the base station when the contention result is that the terminal device successfully obtains the channel through contention.

Optionally, the receiver 85 is specifically configured to receive a sensing request message sent by the base station based on the uplink data sending requirement of the terminal device when the base station detects that the channel is in an idle state, where the sensing request message carries the contention parameter and an indication whether the terminal device sends information, and the information includes a padding signal or uplink data; and
the transmitter 84 is specifically configured to send a sensing response message to the base station, where the sensing response message carries the contention result.

Optionally, the transmitter 84 is specifically configured to determine, based on the scheduling indication of the base station and the indication whether the terminal device sends the information, to send the uplink data.

The terminal device provided in this embodiment of this application may perform the foregoing method embodiment. Implementation principles and technical effects of the terminal device are similar to those of the foregoing method embodiment. Details are not described herein again. Related parts of the method embodiments of the present invention may be mutually referenced. The apparatus provided in each apparatus embodiment is configured to perform the method provided in the corresponding method embodiment. Therefore, each apparatus embodiment may be understood with reference to a related part in the related method embodiment.

A name of a message/frame, module, or unit provided in each embodiment of the present invention is merely an example, and another name may be used, provided that messages/frames, modules, or units have a same function.

A person of ordinary skill in the art may understand that all or some of the steps of the method in any foregoing embodiment may be implemented by a program instructing related hardware. The program may be stored in a readable storage medium of a device, such as a flash or an EEPROM. When the program runs, the program performs all or some of the steps described above.

## Claims

1. A channel contention method, comprising:
sending (S101), by a base station if the base station detects that related information indicating that a channel is in a busy state meets a preset condition, a contention parameter to a terminal device served by the base station, wherein the contention parameter is used to instruct the terminal device served by the base station to contend for the channel based on the contention parameter; and
if a contention result received by the base station from the terminal device served by the base station is that channel contention fails, adjusting (S104), by the base station, the contention parameter to obtain a new contention parameter, and sending (S105) the new contention parameter to the terminal device served by the base station, until the terminal device served by the base station successfully obtains the channel through contention;
wherein the contention parameter comprises a clear channel assessment, CCA threshold and a backoff window size.

2. The method according to claim 1, wherein the sending (S101), by a base station if the base station detects that related information indicating that a channel is in a busy state meets a preset condition, a contention parameter to a terminal device served by the base station specifically comprises:
if a quantity of consecutive times for which the base station detects that the channel is in a busy state is greater than or equal to a preset threshold, adjusting (S201), by the base station, an original contention parameter to be sent to the terminal device served by the base station, to obtain the contention parameter; and
sending (S202), by the base station, the contention parameter to the terminal device served by the base station.

3. The method according to claim 1, wherein the sending (S101), by a base station if the base station detects that related information indicating that a channel is in a busy state meets a preset condition, a contention parameter to a terminal device served by the base station specifically comprises:
if channel states detected by the base station within preset duration are all busy states, adjusting (S301), by the base station, an original contention parameter to be sent to the terminal device served by the base station, to obtain the contention parameter; and
sending (S302), by the base station, the contention parameter to the terminal device served by the base station.

4. The method according to any one of claims 1 to 3, wherein the adjusting (S 104), by the base station, the contention parameter to obtain a new contention parameter specifically comprises:
increasing, by the base station, the CCA threshold, to obtain the new contention parameter; or
decreasing, by the base station, the backoff window size, to obtain the new contention parameter.

5. The method according to any one of claims 1 to 4, wherein the sending (S101), by the base station, the contention parameter to the terminal device served by the base station specifically comprises:
sending (S401), by the base station, a sensing request message to the terminal device served by the base station, wherein the sensing request message carries the contention parameter and an indication whether the terminal device served by the base station sends information, and the information comprises a padding signal or uplink data; and
the receiving, by the base station, a contention result from the terminal device served by the base station specifically comprises:
receiving, by the base station, a sensing response message from the terminal device served by the base station, wherein the sensing response message carries the contention result.

6. A channel contention method, comprising:
receiving (SI02), by a terminal device, a contention parameter sent by a base station, wherein the contention parameter is sent when the base station detects that related information indicating that a channel is in a busy state meets a preset condition;
contending (S103), by the terminal device, for the channel based on the contention parameter, sending a contention result that the channel contention fails to the base station when the channel contention fails, and receiving (S106), from the base station, a new contention parameter obtained after an adjustment, until the terminal device successfully obtains the channel through contention by using the new contention parameter; and
sending (S107), by the terminal device, preset information after successfully obtaining the channel through contention, wherein the information comprises a padding signal or uplink data;
wherein the contention parameter comprises a clear channel assessment CCA threshold and a backoff window size.

7. The method according to claim 6, wherein the receiving (S102), by a terminal device, a contention parameter sent by a base station specifically comprises:
receiving (S402), by the terminal device, a sensing request message sent by the base station, wherein the sensing request message carries the contention parameter and an indication whether the terminal device sends the information; and
the sending a contention result that the channel contention fails to the base station when the channel contention fails specifically comprises:
sending (S404), by the terminal device, a sensing response message to the base station when the channel contention fails, wherein the sensing response message carries the contention result that the channel contention fails;
wherein the sending (S107), by the terminal device, preset information after successfully obtaining the channel through contention specifically comprises:
after successfully obtaining the channel through contention, determining (S408), by the terminal device based on the indication whether the terminal device sends the information, to send the information.

8. A base station, comprising: a detection module (11), a sending module (12), a receiving module (13), and an adjustment module (14), wherein
the sending module (12) is configured to send, when the detection module (11) detects that related information indicating that a channel is in a busy state meets a preset condition, a contention parameter to a terminal device served by the base station, wherein the contention parameter is used to instruct the terminal device served by the base station to contend for the channel based on the contention parameter;
the adjustment module (14) is configured to adjust the contention parameter when a contention result received by the receiving module (13) from the terminal device served by the base station is that channel contention fails, to obtain a new contention parameter; and
the sending module (12) is further configured to send the new contention parameter to the terminal device served by the base station, until the terminal device served by the base station successfully obtains the channel through contention;
wherein the contention parameter comprises a clear channel assessment CCA threshold and a backoff window size;
wherein the adjustment module (14) is specifically configured to: when the detection module (11) continuously detects that a quantity of times that the channel is in a busy state is greater than or equal to a preset threshold, adjust an original contention parameter to be sent to the terminal device served by the base station, to obtain the contention parameter; and
the sending module (12) is specifically configured to send the contention parameter to the terminal device served by the base station; or
wherein the adjustment module (14) is specifically configured to: when channel states detected by the detection module (11) within preset duration are all busy states, adjust an original contention parameter to be sent to the terminal device served by the base station, to obtain the contention parameter; and
the sending module (12) is specifically configured to send the contention parameter to the terminal device served by the base station.

9. A terminal device, comprising: a receiving module (21), a channel contention module (22), and a sending module (23), wherein
the receiving module (21) is configured to receive a contention parameter sent by a base station, wherein the contention parameter is sent when the base station detects that related information indicating that a channel is in a busy state meets a preset condition;
the channel contention module (22) is configured to contend for the channel based on the contention parameter;
the sending module (23) is configured to send a contention result that the channel contention fails to the base station when the channel contention fails;
the receiving module (21) is configured to receive, from the base station, a new contention parameter obtained after an adjustment, until the channel contention module (22) successfully obtains the channel through contention by using the new contention parameter; and
the sending module (23) is further configured to send preset information after the channel contention succeeds, wherein the information comprises a padding signal or uplink data;
wherein the contention parameter comprises a clear channel assessment CCA threshold and a backoff window size.

## Patentansprüche

1. Kanalkonkurrenzverfahren, das Folgendes umfasst:
Senden (S101), durch eine Basisstation, falls die Basisstation erkennt, dass verwandte Informationen, die anzeigen, dass sich ein Kanal in einem belegten Zustand befindet, eine voreingestellte Bedingung erfüllen, eines Konkurrenzparameters an ein Endgerät, das durch die Basisstation bedient wird, wobei der Konkurrenzparameter verwendet wird, um das Endgerät, das durch die Basisstation bedient wird, anzuweisen, basierend auf dem Konkurrenzparameter um den Kanal zu konkurrieren; und
falls ein Konkurrenzergebnis, das durch die Basisstation von dem Endgerät, das durch die Basisstation bedient wird, empfangen wird, darin besteht, dass eine Kanalkonkurrenz fehlschlägt, Anpassen (S104), durch die Basisstation, des Konkurrenzparameters, um einen neuen Konkurrenzparameter zu erhalten, und Senden (S105) des neuen Konkurrenzparameters an das Endgerät, das durch die Basisstation bedient wird, bis das Endgerät, das durch die Basisstation bedient wird, den Kanal durch Konkurrenz erfolgreich erhält;
wobei der Konkurrenzparameter eine Freikanalanalyse(*clear channel assessment* - CCA)-Schwelle und eine Backoff-Fenstergröße umfasst.

2. Verfahren nach Anspruch 1, wobei das Senden (S101), durch eine Basisstation, falls die Basisstation erkennt, dass verwandte Informationen, die anzeigen, dass sich ein Kanal in einem belegten Zustand befindet, eine voreingestellte Bedingung erfüllen, eines Konkurrenzparameters an ein Endgerät, das durch die Basisstation bedient wird, speziell Folgendes umfasst:
falls eine Anzahl aufeinanderfolgender Male, in denen die Basisstation erkennt, dass sich der Kanal in einem belegten Zustand befindet, größer als oder gleich einem voreingestellten Schwellenwert ist, Anpassen (S201), durch die Basisstation, eines ursprünglichen Konkurrenzparameters, der an das Endgerät, das durch die Basisstation bedient wird, gesendet werden soll, um den Konkurrenzparameter zu erhalten; und
Senden (S202), durch die Basisstation, des Konkurrenzparameters an das Endgerät, das durch die Basisstation bedient wird.

3. Verfahren nach Anspruch 1, wobei das Senden (S101), durch eine Basisstation, falls die Basisstation erkennt, dass verwandte Informationen, die anzeigen, dass sich ein Kanal in einem belegten Zustand befindet, eine voreingestellte Bedingung erfüllen, eines Konkurrenzparameters an ein Endgerät, das durch die Basisstation bedient wird, speziell Folgendes umfasst:
falls Kanalzustände, die durch die Basisstation innerhalb der voreingestellten Dauer erkannt werden, alle belegte Zustände sind, Anpassen (S301), durch die Basisstation, eines ursprünglichen Konkurrenzparameters, der an das Endgerät, das durch die Basisstation bedient wird, gesendet werden soll, um den Konkurrenzparameter zu erhalten; und
Senden (S302), durch die Basisstation, des Konkurrenzparameters an das Endgerät, das durch die Basisstation bedient wird.

4. Verfahren nach einem der Ansprüche 1 bis 3, wobei das Anpassen (S104), durch die Basisstation, des Konkurrenzparameters, um einen neuen Konkurrenzparameter zu erhalten, speziell Folgendes umfasst:
Erhöhen, durch die Basisstation, der CCA-Schwelle, um den neuen Konkurrenzparameter zu erhalten; oder
Verringern, durch die Basisstation, der Backoff-Fenstergröße, um den neuen Konkurrenzparameter zu erhalten.

5. Verfahren nach einem der Ansprüche 1 bis 4, wobei das Senden (S101), durch die Basisstation, des Konkurrenzparameters an das Endgerät, das durch die Basisstation bedient wird, speziell Folgendes umfasst:
Senden (S401), durch die Basisstation, einer Erfassungsanforderungsnachricht an das Endgerät, das durch die Basisstation bedient wird, wobei die Erfassungsanforderungsnachricht den Konkurrenzparameter und eine Anzeige trägt, ob das Endgerät, das durch die Basisstation bedient wird, Informationen sendet, und die Informationen ein Auffüllsignal oder Uplink-Daten umfassen; und
das Empfangen, durch die Basisstation, eines Konkurrenzergebnisses von dem Endgerät, das durch die Basisstation bedient wird, speziell Folgendes umfasst:
Empfangen, durch die Basisstation, einer Erfassungsanforderungsnachricht von dem Endgerät, das durch die Basisstation bedient wird, wobei die Erfassungsantwortnachricht das Konkurrenzergebnis trägt.

6. Kanalkonkurrenzverfahren, das Folgendes umfasst:
Empfangen (S102), durch ein Endgerät, eines Konkurrenzparameters, der durch eine Basisstation gesendet wird, wobei der Konkurrenzparameter gesendet wird, wenn die Basisstation erkennt, dass verwandte Informationen, die anzeigen, dass sich ein Kanal in einem belegten Zustand befindet, eine voreingestellte Bedingung erfüllen;
Konkurrieren (S103), durch das Endgerät, um den Kanal basierend auf dem Konkurrenzparameter, Senden eines Konkurrenzergebnisses, dass die Kanalkonkurrenz fehlschlägt, an die Basisstation, wenn die Kanalkonkurrenz fehlschlägt, und Empfangen (S106), von der Basisstation, eines neuen Konkurrenzparameters, der nach einer Anpassung erhalten wird, bis das Endgerät den Kanal durch Konkurrenz durch Verwenden des neuen Konkurrenzparameters erfolgreich erhält; und
Senden (S107), durch das Endgerät, voreingestellter Informationen nach erfolgreichem Erhalten des Kanals durch Konkurrenz, wobei die Informationen ein Auffüllsignal oder Uplink-Daten umfassen;
wobei der Konkurrenzparameter eine Freikanalanalyse(CCA)-Schwelle und eine Backoff-Fenstergröße umfasst.

7. Verfahren nach Anspruch 6, wobei das Empfangen (S102), durch ein Endgerät, eines Konkurrenzparameters, der durch eine Basisstation gesendet wird, speziell Folgendes umfasst:
Empfangen (S402), durch das Endgerät, einer Erfassungsanforderungsnachricht, die durch die Basisstation gesendet wird, wobei die Erfassungsanforderungsnachricht den Konkurrenzparameter und eine Anzeige trägt, ob das Endgerät die Informationen sendet; und
das Senden eines Konkurrenzergebnisses, dass die Kanalkonkurrenz fehlschlägt, an die Basisstation, wenn die Kanalkonkurrenz fehlschlägt, speziell Folgendes umfasst:
Senden (S404), durch das Endgerät, einer Erfassungsantwortnachricht an die Basisstation, wenn die Kanalkonkurrenz fehlschlägt, wobei die Erfassungsantwortnachricht das Konkurrenzergebnis, dass die Kanalkonkurrenz fehlschlägt, trägt;
wobei das Senden (S107), durch das Endgerät, von voreingestellten Informationen nach erfolgreichem Erhalten des Kanals durch Konkurrenz speziell Folgendes umfasst:
nach erfolgreichem Erhalten des Kanals durch Konkurrenz, Bestimmen (S408), durch das Endgerät basierend auf der Anzeige, ob das Endgerät die Informationen sendet, die Informationen zu senden.

8. Basisstation, die Folgendes umfasst:
ein Erkennungsmodul (11), ein Sendemodul (12), ein Empfangsmodul (13) und ein Anpassungsmodul (14), wobei
das Sendemodul (12) konfiguriert ist, um, wenn das Erkennungsmodul (11) erkennt, dass verwandte Informationen, die anzeigen, dass sich ein Kanal in einem belegten Zustand befindet, eine voreingestellte Bedingung erfüllen, einen Konkurrenzparameter an ein Endgerät, das durch die Basisstation bedient wird, zu senden, wobei der Konkurrenzparameter verwendet wird, um das Endgerät, das durch die Basisstation bedient wird, anzuweisen, basierend auf dem Konkurrenzparameter um den Kanal zu konkurrieren;
das Anpassungsmodul (14) konfiguriert ist, um den Konkurrenzparameter anzupassen, wenn ein Konkurrenzergebnis, das durch das Empfangsmodul (13) von dem Endgerät, das durch die Basisstation bedient wird, empfangen wird, darin besteht, dass die Kanalkonkurrenz fehlschlägt, um einen neuen Konkurrenzparameter zu erhalten; und
das Sendemodul (12) ferner konfiguriert ist, um den neuen Konkurrenzparameter an das Endgerät, das durch die Basisstation bedient wird, zu senden, bis das Endgerät, das durch die Basisstation bedient wird, den Kanal durch Konkurrenz erfolgreich erhält;
wobei der Konkurrenzparameter eine Freikanalanalyse(CCA)-Schwelle und eine Backoff-Fenstergröße umfasst;
wobei das Anpassungsmodul (14) speziell für Folgendes konfiguriert ist:
wenn das Erkennungsmodul (11) fortlaufend erkennt, dass eine Anzahl von Malen, in denen sich der Kanal in einem belegten Zustand befindet, größer als oder gleich einem voreingestellten Schwellenwert ist, Anpassen eines ursprünglichen Konkurrenzparameters, der an das Endgerät, das durch die Basisstation bedient wird, gesendet werden soll, um den Konkurrenzparameter zu erhalten; und
das Sendemodul (12) speziell konfiguriert ist, um den Konkurrenzparameter an das Endgerät, das durch die Basisstation bedient wird, zu senden; oder
wobei das Anpassungsmodul (14) speziell für Folgendes konfiguriert ist:
wenn die Kanalzustände, die durch das Erkennungsmodul (11) innerhalb der voreingestellten Dauer erkannt werden, alle belegte Zustände sind, Anpassen eines ursprünglichen Konkurrenzparameters, der an das Endgerät, das durch die Basisstation bedient wird, gesendet werden soll, um den Konkurrenzparameter zu erhalten; und
das Sendemodul (12) speziell konfiguriert ist, um den Konkurrenzparameter an das Endgerät, das durch die Basisstation bedient wird, zu senden.

9. Endgerät, das Folgendes umfasst:
ein Empfangsmodul (21), ein Kanalkonkurrenzmodul (22) und ein Sendemodul (23), wobei das Empfangsmodul (21) konfiguriert ist, um einen Konkurrenzparameter, der durch eine Basisstation gesendet wird, zu empfangen, wobei der Konkurrenzparameter gesendet wird, wenn die Basisstation erkennt, dass verwandte Informationen, die anzeigen, dass sich ein Kanal in einem belegten Zustand befindet, eine voreingestellte Bedingung erfüllen;
das Kanalkonkurrenzmodul (22) konfiguriert ist, um basierend auf dem Konkurrenzparameter um den Kanal zu konkurrieren;
das Sendemodul (23) konfiguriert ist, um ein Konkurrenzergebnis, dass die Kanalkonkurrenz fehlschlägt, an die Basisstation zu senden, wenn die Kanalkonkurrenz fehlschlägt;
das Empfangsmodul (21) konfiguriert ist, um, von der Basisstation, einen neuen Konkurrenzparameter zu empfangen, der nach einer Anpassung erhalten wird, bis das Kanalkonkurrenzmodul (22) den Kanal durch Konkurrenz durch Verwenden des neuen Konkurrenzparameters erfolgreich erhält; und
das Sendemodul (23) ferner konfiguriert ist, um voreingestellte Informationen zu senden, nachdem die Kanalkonkurrenz erfolgreich war, wobei die Informationen ein Auffüllsignal oder Uplink-Daten umfassen;
wobei der Konkurrenzparameter eine Freikanalanalyse(CCA)-Schwelle und eine Backoff-Fenstergröße umfasst.

## Revendications

1. Procédé de contention de canal, comprenant :
l'envoi (S101), par une station de base si la station de base détecte que les informations associées indiquant qu'un canal est dans un état occupé respectent une condition prédéfinie, d'un paramètre de contention à un dispositif terminal desservi par la station de base, le paramètre de contention étant utilisé pour ordonner au dispositif terminal desservi par la station de base d'entrer en contention pour le canal sur la base du paramètre de contention ; et
si un résultat de contention reçu par la station de base en provenance du dispositif terminal desservi par la station de base indique que la contention de canal échoue, le réglage (S104), par la station de base, du paramètre de contention afin d'obtenir un nouveau paramètre de contention, et l'envoi (S105) du nouveau paramètre de contention au dispositif terminal desservi par la station de base, jusqu'à ce que le dispositif terminal desservi par la station de base obtienne avec succès le canal par contention ;
le paramètre de contention comprenant un seuil d'évaluation de canal libre, CCA, et une taille de fenêtre d'attente.

2. Procédé selon la revendication 1, dans lequel l'envoi (S101), par une station de base si la station de base détecte que les informations associées indiquant qu'un canal est dans un état occupé respectent une condition prédéfinie, d'un paramètre de contention à un dispositif terminal desservi par la station de base comprend précisément :
si une quantité de temps consécutifs pendant lesquels la station de base détecte que le canal est dans un état occupé est supérieure ou égale à un seuil prédéfini, le réglage (S201), par la station de base, d'un paramètre de contention d'origine à envoyer au dispositif terminal desservi par la station de base, afin d'obtenir le paramètre de contention ; et
l'envoi (S202), par la station de base, du paramètre de contention au dispositif terminal desservi par la station de base.

3. Procédé selon la revendication 1, dans lequel l'envoi (S101), par une station de base si la station de base détecte que les informations associées indiquant qu'un canal est dans un état occupé respectent une condition prédéfinie, d'un paramètre de contention à un dispositif terminal desservi par la station de base comprend précisément :
si des états de canal détectés par la station de base pendant une durée prédéfinie sont tous des états occupés, le réglage (S301), par la station de base, d'un paramètre de contention d'origine à envoyer au dispositif terminal desservi par la station de base, afin d'obtenir le paramètre de contention ; et
l'envoi (S302), par la station de base, du paramètre de contention au dispositif terminal desservi par la station de base.

4. Procédé selon l'une quelconque des revendications 1 à 3, dans lequel le réglage (S104), par la station de base, du paramètre de contention afin d'obtenir un nouveau paramètre de contention comprend précisément :
l'augmentation, par la station de base, du seuil de CCA, afin d'obtenir le nouveau paramètre de contention ; ou
la diminution, par la station de base, de la taille de fenêtre d'attente, afin d'obtenir le nouveau paramètre de contention.

5. Procédé selon l'une quelconque des revendications 1 à 4, dans lequel l'envoi (S101), par la station de base, du paramètre de contention au dispositif terminal desservi par la station de base comprend précisément :
l'envoi (S401), par la station de base, d'un message de demande de détection au dispositif terminal desservi par la station de base, le message de demande de détection transportant le paramètre de contention et une indication du fait de savoir si le dispositif terminal desservi par la station de base envoie des informations, et les informations comprenant un signal de remplissage ou des données de liaison montante ; et
la réception, par la station de base, d'un résultat de contention du dispositif terminal desservi par la station de base comprend précisément :
la réception, par la station de base, d'un message de réponse de détection du dispositif terminal desservi par la station de base, le message de réponse de détection transportant le résultat de contention.

6. Procédé de contention de canal, comprenant :
la réception (S102), par un dispositif terminal, d'un paramètre de contention envoyé par une station de base, le paramètre de contention étant envoyé lorsque la station de base détecte que les informations associées indiquant qu'un canal est dans un état occupé respectent une condition prédéfinie ;
la contention (S103), par le dispositif terminal, pour le canal sur la base du paramètre de contention, l'envoi d'un résultat de contention indiquant que la contention de canal échoue à la station de base lorsque la contention de canal échoue, et la réception (S106), depuis la station de base, d'un nouveau paramètre de contention obtenu après un réglage, jusqu'à ce que le dispositif terminal obtienne avec succès le canal par contention à l'aide du nouveau paramètre de contention ; et
l'envoi (S107), par le dispositif terminal, d'informations prédéfinies après avoir obtenu avec succès le canal par contention, les informations comprenant un signal de remplissage ou des données de liaison montante ;
le paramètre de contention comprenant un seuil d'évaluation de canal libre, CCA, et une taille de fenêtre d'attente.

7. Procédé selon la revendication 6, dans lequel la réception (S102), par un dispositif terminal, d'un paramètre de contention envoyé par une station de base comprend précisément :
la réception (S402), par le dispositif terminal, d'un message de demande de détection envoyé par la station de base, le message de demande de détection transportant le paramètre de contention et une indication du fait de savoir si le dispositif terminal envoie les informations ; et
l'envoi d'un résultat de contention indiquant que la contention de canal échoue à la station de base lorsque la contention de canal échoue comprend précisément :
l'envoi (S404), par le dispositif terminal, d'un message de réponse de détection à la station de base lorsque la contention de canal échoue, le message de réponse de détection transportant le résultat de contention indiquant que la contention de canal échoue ;
l'envoi (S107), par le dispositif terminal, d'informations prédéfinies après avoir obtenu avec succès le canal par contention comprenant précisément :
après avoir obtenu avec succès le canal par contention, la détermination (S408), par le dispositif terminal sur la base de l'indication du fait de savoir si le dispositif terminal envoie les informations, d'envoyer les informations.

8. Station de base, comprenant : un module de détection (11), un module d'envoi (12), un module de réception (13) et un module de réglage (14),
le module d'envoi (12) étant configuré pour envoyer, lorsque le module de détection (11) détecte que des informations associées indiquant qu'un canal est dans un état occupé respectent une condition prédéfinie, un paramètre de contention à un dispositif terminal desservi par la station de base, le paramètre de contention étant utilisé pour ordonner au dispositif terminal desservi par la station de base d'entrer en contention pour le canal sur la base du paramètre de contention ;
le module de réglage (14) étant configuré pour régler le paramètre de contention lorsqu'un résultat de contention reçu par le module de réception (13) depuis le dispositif terminal desservi par la station de base indique que la contention de canal échoue, afin d'obtenir un nouveau paramètre de contention ; et
le module d'envoi (12) étant en outre configuré pour envoyer le nouveau paramètre de contention au dispositif terminal desservi par la station de base, jusqu'à ce que le dispositif terminal desservi par la station de base obtienne avec succès le canal par contention ;
le paramètre de contention comprenant un seuil d'évaluation de canal libre, CCA, et une taille de fenêtre d'attente ;
le module de réglage (14) étant précisément configuré pour : lorsque le module de détection (11) détecte en continu qu'une quantité de fois où le canal est dans un état occupé est supérieure ou égale à un seuil prédéfini, régler un paramètre de contention d'origine à envoyer au dispositif terminal desservi par la station de base, afin d'obtenir le paramètre de contention ; et
le module d'envoi (12) étant précisément configuré pour envoyer le paramètre de contention au dispositif terminal desservi par la station de base ; ou
le module de réglage (14) étant précisément configuré pour : lorsque des états de canal détectés par le module de détection (11) pendant une durée prédéfinie sont tous des états occupés, régler un paramètre de contention d'origine à envoyer au dispositif terminal desservi par la station de base, afin d'obtenir le paramètre de contention ; et
le module d'envoi (12) étant précisément configuré pour envoyer le paramètre de contention au dispositif terminal desservi par la station de base.

9. Dispositif terminal, comprenant : un module de réception (21), un module de contention de canal (22) et un module d'envoi (23),
le module de réception (21) étant configuré pour recevoir un paramètre de contention envoyé par une station de base, le paramètre de contention étant envoyé lorsque la station de base détecte que les informations associées indiquant qu'un canal est dans un état occupé respectent une condition prédéfinie ;
le module de contention de canal (22) étant configuré pour entrer en contention pour le canal sur la base du paramètre de contention ;
le module d'envoi (23) étant configuré pour envoyer un résultat de contention indiquant que la contention de canal échoue à la station de base lorsque la contention de canal échoue ;
le module de réception (21) étant configuré pour recevoir, depuis la station de base, un nouveau paramètre de contention obtenu après un réglage, jusqu'à ce que le module de contention de canal (22) obtienne avec succès le canal par contention à l'aide du nouveau paramètre de contention ; et
le module d'envoi (23) étant en outre configuré pour envoyer des informations prédéfinies après la réussite de la contention de canal, les informations comprenant un signal de remplissage ou des données de liaison montante ;
le paramètre de contention comprenant un seuil d'évaluation de canal libre, CCA, et une taille de fenêtre d'attente.
